# EUROPÄISCHE PATENTSCHRIFT

(11) **EP 1 685 471 B1**
(45) Veröffentlichungstag und Bekanntmachung des Hinweises auf die Patenterteilung: **02.01.2008**
(21) Anmeldenummer: 04818775.1
(22) Anmeldetag: 12.11.2004
(51) Int. Cl.: G06F 21/20

(54) **INDIVIDUELLE GÜLTIGKEITSDAUER FÜR PASSWORT, PIN UND PASSPHRASE**
INDIVIDUAL PERIOD OF VALIDITY FOR A PASSWORD, PIN, AND PASSPHRASE
PERIODE INDIVIDUELLE DE VALIDITE POUR MOT DE PASSE, NIP ET PHRASE PASSE

(30) Priorität: 14.11.2003 DE 10353538
(43) Veröffentlichungstag der Anmeldung: 02.08.2006
(73) Patentinhaber: T-Mobile International AG & CO. KG, 53227 Bonn (DE)
(72) Erfinder: KRAMARZ-VON KOHOUT, Gerhard, 53113 Bonn (DE)
(74) Vertreter: Riebling, Peter
(86) Internationale Anmeldenummer: PCT/EP2004/012863
(87) Internationale Veröffentlichungsnummer: WO 2005/050417

(56) Entgegenhaltungen:
- US-A- 5 606 663
- US-A- 5 944 825
- US-A1- 2001 004 759
- US-A1- 2004 177 272

## Beschreibung

Die Erfindung betrifft ein Verfahren zur Zuweisung einer individuellen Gültigkeitsdauer zu einem Passwort eines Benutzers, insbesondere einem Benutzer von Anwendungen und Geräten der Datenverarbeitungstechnik. Der Begriff "Passwort" wird im Rahmen dieser Erfindung gleichbedeutend zu den Begriffen "Passphrase" oder auch "PIN (Personal Identification Number)" verwendet. Ein Passwort ist eine Information zur Authentifizierung, die nur der rechtmäßige Nutzer kennen soll. Es kann beispielsweise aus Ziffern, Buchstaben, Sonderzeichen, grafischen Elementen oder deren Kombination bestehen.

Zum technologischen Hintergrund sei allgemein auf die Veröffentlichungen US 5 606 663 A, US 5 944 825 A und US 2001/004759 A hingewiesen, in denen Verfahren zum Passwortmanagement beschrieben sind.

In der heutigen Welt kommen wir täglich mit vielen verschiedenen Authentifizierungssystemen in Berührung, und ein Großteil dieser Systeme verwendet ein Passwortverfahren, um einen Benutzer gegenüber einem System zu authentifizieren. Der richtige Umgang mit Passwortverfahren ist einer der essentiellsten Faktoren bei der Sicherheit von Rechnersystemen und Daten allgemein. Das Passwortverfahren ist das einfachste Authentifikationsverfahren bei Computersystemen, stationären oder mobilen Terminals und im Internet. Der Benutzer wird aufgefordert, sich mit seiner Benutzerkennung /Accountbezeichnung und dem dazugehörigen Passwort zu authentifizieren. Es gibt auch Systeme, die den Benutzer ausschließlich über ein Passwort (d.h. ohne Angabe einer Benutzerkennung oder Accountbezeichnung) authentifizieren. Diesen Prozess bezeichnet man üblicherweise mit Anmelden oder Einloggen. Die Sicherheit dieses Verfahrens beruht hauptsächlich auf der Geheimhaltung und der Qualität des Passworts. Passwörter sind die Grundsteine, die Eckpfeiler der Computer-Sicherheit, aber auch gleichzeitig eine ihrer größten Schwachstellen.

Aber auch modernere Authentifikationsverfahren kommen selten ohne ein Passwort aus. Eine Chipkarte oder ein sonstiges Hardware-Token etwa, werden üblicherweise durch Eingabe einer numerischen PIN freigegeben. Authentifikationsverfahren, die auf Public-Key-Verfahren beruhen und mit Zertifikaten arbeiten, benötigen Passwörter zur Aktivierung der Private Keys.

Gute Passwörter sind jene, die sich von einem Dritten äußerst schwer ermitteln lassen. Eine gutes Passwort sollte aus folgenden Elementen aufgebaut sein:
- Groß- und Kleinbuchstaben
- Zahlen und Sonderzeichen
- und eine Mindestlänge von 8 Zeichen haben.

Der Nutzer muss sich das Passwort entweder im Gedächtnis merken oder aber es auf logisch u./o. physikalisch sichere Weise deponieren, um Dritten den einfachen Zugriff auf die Information zu verwehren. Denkbar wäre beispielsweise die Niederschrift des Passwortes auf einen Zettel, der anschließend in einem Tresor zu deponieren ist. Um ein sicheres Passwort sich merken zu können, gibt es z.B. den Vorschlag, als Passwort die Anfangszeichen der Wörter eines längeren Satzes zu wählen. So ließe sich das Passwort "Iw,d30%v13=3.9i" über den Satz "Ich weiß, dass 30% von 13 gleich 3.9 ist" merken.

Ein Passwort sollte aus Sicherheitsgründen möglichst oft gewechselt werden, weil mit der Zeit die Chance steigt, dass ein Dritter - absichtlich oder zufällig - unbefugt Kenntnis des Passwortes erlangt. Empfohlen wird meist ein Wechsel etwa alle 30 Tage. Hierbei sollte man das Wiederverwenden von alten Passwörtern genauso wie das mehrfache Benutzen desselben Passwortes auf verschiedenen Konten und/oder Rechnern unterlassen. Einige moderne Betriebssysteme erinnern den Nutzer an den Ablauf der Gültigkeit seines Passwortes und fordern ihn rechtzeitig und ggf. mehrfach in regelmäßigen Abständen (z.B. 8 Tage vorab, 7 Tage vorab, ...) auf, sein Passwort zu wechseln.

Bei der Definition eines "sicheren" Passwortes hat ein Benutzer also nahezu konträre Anforderungen zu beachten. Er soll nur möglichst komplexe "kryptische" Passwörter nutzen, er soll diese sicher, das heißt für Dritte unzugänglich speichern oder sich merken und er soll möglichst oft sein aktuelles Passwort wechseln und hierbei ein neues, von ihm bislang nicht verwandtes Passwort wählen. Die Anforderung nach häufigem Wechsel des Passwortes führt in der Praxis entweder zu unsicheren, weil zu simpel aufgebauten Passwörtern oder zu einer unakzeptablen Hinterlegung des Passwortes, z. B. auf einem Notizzettel unter der PC-Tastatur, etc.

Ein weiterer Nachteil der bisher praktizierten Passwortverwaltung ist es, dass ein Benutzer nach einer gewissen Frist, z.B. nach vier / acht / zwölf Wochen, je nach Einstellung im System, vom System automatisch aufgefordert wird, sein Passwort zu wechseln. Die Gültigkeitsdauer eines Passwortes ist in der Regel für alle Benutzer eines Systems gleich lang und unabhängig von der "Qualität" des verwendeten Passwortes. Somit besteht die Gefahr, dass viele Benutzer doch nur relativ simple Passwörter wählen.

Es ist daher die Aufgabe der vorliegenden Erfindung, ein System und Verfahren zur Zuweisung eines individuellen Passworts vorzuschlagen, das die Sicherheit bei der Passwortvergabe steigert und den Verwaltungsaufwand in einem Passwortmanagementsystem verringert.

Mit der Erfindung soll allgemein erreicht werden, die Verwendung von sicheren Passwörtern zu vereinfachen und den Benutzer auf diese Weise zu ermuntern, ein sicheres Passwort-zu verwenden.

Diese Aufgabe wird erfindungsgemäß durch das in den unabhängigen Ansprüchen angegebene System bzw. Verfahren gelöst.

Vorteilhafte Ausgestaltungen und Weiterbildungen der Erfindung ergeben sich aus den abhängigen Ansprüchen.

Die Erfindung basiert generell auf folgendem Ablauf:
Der Benutzer eines Datenverarbeitungssystems oder einer Anwendung definiert bei erstmaliger Anmeldung ein Passwort seiner Wahl. Das System ermittelt auf Basis einer internen Bewertungsfunktion (Evaluationsfunktion) automatisch das Sicherheitsniveau des Passwortes.

In bevorzugter Weise wird das Sicherheitsniveau des Passwortes insbesondere anhand von einem oder mehreren der folgenden Kriterien bestimmt: der Länge des Passworts, der Art der verwendeten Zeichen sowie der semantischen Bedeutung des Passwortes insgesamt oder von Teilen des Passwortes.

Das System sollte daher insbesondere prüfen, ob das Passwort gegen sogenannte "Wörterbuchattacken" gefeit ist, also ob es Bestandteile enthält, die in einem landessprachlichen oder auch fremdsprachlichen Wörterbuch vorkommen.

Ein wesentliches Merkmal der Erfindung ist, dass das System in Abhängigkeit des ermittelten Sicherheitsniveaus des Passwortes automatisch die Gültigkeitsdauer dieses Passwortes festlegt. Das heißt, sehr sichere Passwörter dürfen z.B. einige Monate, weniger sichere Passwörter z.B. gar nicht oder nur einige Tage oder Wochen genutzt werden.

In einer bevorzugten Ausgestaltung der Erfindung werden dem Benutzer vor der Zuweisung des Passwortes dessen ermittelte Güteklasse und/oder Gültigkeitsdauer angezeigt, so dass der Benutzer individuell an Hand der Güteklasse und/oder Gültigkeitsdauer entscheiden kann, ob er das Passwort nutzen will oder nicht. Akzeptiert der Benutzer die Bewertung, so wird ihm das Passwort mit der entsprechenden Gültigkeitsdauer zugewiesen.

In einer bevorzugten Ausgestaltung der Erfindung wird der Benutzer rechtzeitig, in der Regel kurz vor Ablauf der Gültigkeit eines Passwortes automatisch vom System aufgefordert, ein neues Passwort seiner Wahl zu definieren. Hierbei überprüft das System automatisch die Passwortvergangenheit, das heißt ein neues Passwort darf keine Übereinstimmung mit den vergangenen Passwörtern zeigen. Es kann dabei ein Vergleich des neuen Passwortes mit den letzten x Passwörtern des Nutzers bzw. der Passwörter des Nutzers aus dem vergangenen Zeitraum y bzw. eine Kombination hiervon durchgeführt werden. Liegt eine Übereinstimmung vor, so wird das Passwort zurückgewiesen.

Im Rahmen der Erfindung können dem Nutzer Hinweise gegeben werden, wie er ein einzelnes Passwort sicher wählen und sich merken kann. Zum Beispiel das Passwort "lw,d30%v13=3.9i", welches sich über den Satz "Ich weiß, dass 30% von 13 gleich 3.9 ist" merken ließe.

Mit anderen Worten geht es bei der Erfindung darum, die Gültigkeitsdauer des Passwortes nicht für alle Nutzer und alle möglichen Passwörter konstant, z. B. vier Wochen, sondern individuell in Abhängigkeit von der Güte des Passwortes festzulegen.

Ziel der Erfindung ist es somit, den Nutzer zu motivieren, ein Passwort mit höherer Güte zu wählen, weil er dann sein Passwort länger nutzen darf und nicht so schnell vom System gezwungen wird, sein Passwort zu wechseln. Auf diese Weise steigt darüber hinaus auch die Sicherheit des Systems insgesamt, insbesondere wenn viele Nutzer ein Passwort mit höherer Güte gewählt haben, so dass auch der Systemverwalter von der Erfindung profitieren kann.

Die Vorteile der Erfindung liegen auf der Hand. Mitarbeiter, die sich ein sehr sicheres Passwort wählen, werden vom System belohnt, indem die Gültigkeit des Passwortes verlängert wird. Danach muss auch dieses Passwort geändert werden. Schlechtere Passwörter wie z. B "Maria123" haben eine vergleichsweise kurze Gültigkeit. Ganz schlechte Passwörter wie "Maria" werden ggf. gar nicht akzeptiert. Den Benutzern wäre entsprechend zu kommunizieren, dass sie für gute Passwörter in dieser Weise belohnt werden, um einen Anreiz zu schaffen, auch wirklich sichere Passwörter zu wählen.

Insgesamt steigt die Sicherheit, da ein sicheres Passwort exponentiell besser als ein schlechtes Passwort ist, die Verlängerung der Gültigkeitsdauer aber dem nur linear entgegensteht. Darüber hinaus steigt die Sicherheit für Unternehmen, in denen ein solches Passwortmanagement durchgeführt wird, insgesamt.

Der Benutzer muss sich weniger oft mit neuen Passwörtern belasten, das spart im Prinzip Zeit und Energie. Da der Benutzer eines sicheren Passwortes durch eine längere Gültigkeitsdauer seines Passwortes belohnt wird, entlastet dies auch die Passwortadministratoren, da in der Regel häufigerer Wechsel zu häufigerem Vergessen der Passwörter bei den Nutzern und somit zu verstärkten Nachfragen bei der Systemadministration führt, das spart ebenfalls im Prinzip Zeit, Energie und auch Kosten.

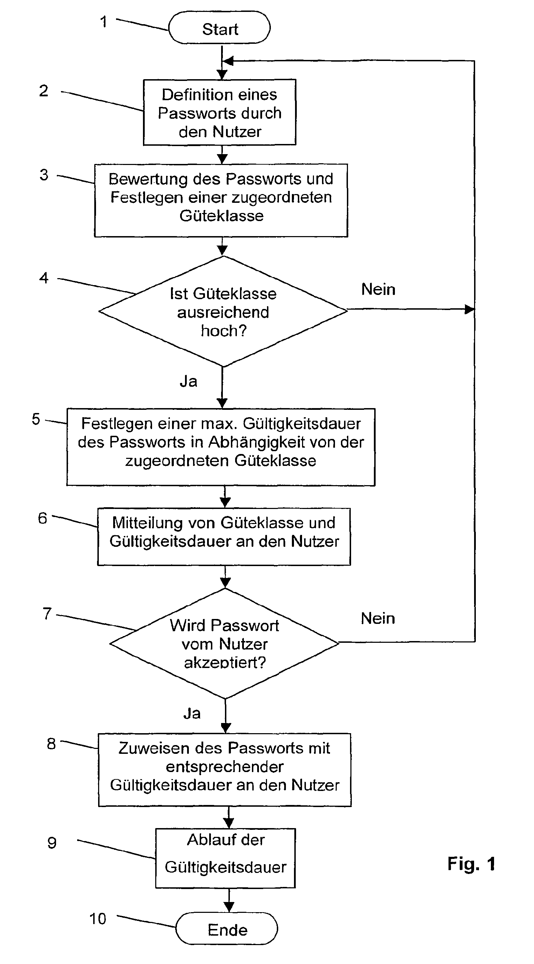

Anhand eines Ablaufdiagramms gemäß Figur 1 wird nun ein einfaches Ausführungsbeispiel der Erfindung näher erläutert.

Es sei angenommen, dass ein Benutzer ein Computersystem benutzen will, für das ein Passwort erforderlich ist. Zu Beginn (Schritt 1), also bei der erstmaligen Benutzung des Systems wird der Benutzer aufgefordert, ein persönliches Passwort zu kreieren und in das System einzugeben (Schritt 2). Entsprechendes gilt bei Wunsch oder Notwendigkeit, das bisherige Passwort durch ein neues Passwort abzulösen.

Das Computersystem verfügt zum Beispiel über ein auf Hardware und / oder Software basierendes Passwortmanagementsystem. Das Passwortmanagementsystem sei so gestaltet, dass es eine systeminterne Bewertungsfunktion, die das vom Benutzer eingegebene Passwort bewertet und einer Güteklasse - z.B. aus mehreren vorgegebenen Güteklassen - zuordnet, umfasse (Schritt 3). Je höher die Güteklasse ist, desto höher ist das Sicherheitsniveau des Passwortes beziehungsweise dessen sicherheitsbezogene Qualität.

Ein einfaches Beispiel für eine Güteklassifizierung kann folgendermaßen aussehen:
- Güteklasse 0 = "unsicher"
- Güteklasse 1 = "wenig sicher"
- Güteklasse 2 = "akzeptabel sicher"
- Güteklasse 3 = "sicher"
- Güteklasse 4 = "sehr sicher"

Dieses Beispiel soll nur dem Verständnis einer solchen Klassifizierung dienen. In der Praxis mag die konkrete Ausprägung einer Güteklassifizierung eine andere sein.

Nachfolgend ist ein einfaches Beispiel für die Zuordnung einer Güteklasse zu einem Passwort angegeben (auch dieses Beispiel soll nur dem Verständnis einer solchen Zuordnung dienen):
Die Bewertungsfunktion gibt für Passwörter mit höchstens vier Zeichen oder für Passwörter, die nur aus Buchstaben bestehen, 0 Punkte.
Wenn das Passwort mindestens 5 Zeichen enthält, gibt die Bewertungsfunktion je 1 Punkt pro Zeichen des Passwortes und zusätzlich je 2 Punkte pro verwendetes Sonderzeichen.

Beispielsweise erhält das Passwort "Morgen1rot" bei dieser Art der Bewertung 10 Punkte, da es aus 10 Zeichen ohne Sonderzeichen besteht. Das Passwort "M%r§e$n" erhält 13 Punkte, da es aus 7 Zeichen inklusive 3 Sonderzeichen (7 + 3*2 = 13) besteht. Die Passwörter "Mondschein" oder "Mo%d" würden 0 Punkte erhalten.

Anhand der Punktezahl können die Passwörter einer der oben genannten Güteklasse zugeordnet werden, beispielsweise auf folgende Weise (auch dieses Beispiel soll nur dem Verständnis einer solchen Zuordnung dienen):
- Passwörter mit 0 Punkten werden der Güteklasse 0 zugeordnet, sind also "unsicher".
- Passwörter mit bis zu 8 Punkten werden der Güteklasse 1 zugeordnet, sind also "wenig sicher".
- Passwörter mit 9 bis 12 Punkten werden der Güteklasse 2 zugeordnet, sind also "akzeptabel sicher".
- Passwörter mit 13 bis 16 Punkten werden der Güteklasse 3 zugeordnet, sind also "sicher".
- Passwörter mit mindestens 17 Punkten werden Güteklasse 4 zugeordnet, sind also "sehr sicher".

In der Praxis sollte die Bewertungsfunktion einen Wörterbuch-Check enthalten und zusätzlich auch die Passwort-Vergangenheit (History) des Nutzers auswerten, um zu verhindern, dass der Nutzer ein früher von ihm bereits verwendetes und inzwischen ungültig gewordenes Passwort erneut verwendet.

Passwörter mit zu geringer Güteklasse werden vom System vorzugsweise unmittelbar zurückgewiesen. Zum Beispiel werden alle Passwörter mit Güteklasse 0 (bezogen auf obiges Beispiel) nicht akzeptiert. Der Benutzer wird aufgefordert, ein anderes Passwort einzugeben (Schritt 4).

Wird das Passwort vom System angenommen, dann wird in Abhängigkeit der ermittelten Güteklasse des Passworts automatisch eine maximale Gültigkeitsdauer des Passwortes festgelegt (Schritt 5).

Bei der Verwendung der oben geschilderten Güteklassen kann die Gültigkeitsdauer eines Passwortes z. B. folgendermaßen festgelegt werden: Gültigkeitsdauer in Wochen = 2 * Güteklasse. Das heißt ein "wenig sicheres" Passwort der Güteklasse 1 hat nach obigem Beispiel eine Gültigkeitsdauer von 2*1, also zwei Wochen, und ein "sehr sicheres" Passwort der Güteklasse 4 darf 2*4 Wochen, also acht Wochen verwendet werden. Auch dieses Beispiel soll nur dem Verständnis einer solchen Zuordnung dienen. Natürlich kann die Gültigkeitsdauer anhand einer beliebigen mathematischen oder sonstigen Beziehung aus der Güteklasse ermittelt werden oder anhand einer Tabelle festgelegt sein.

Optional kann nun dem Benutzer die ermittelte Güteklasse und maximale Gültigkeitsdauer seines soeben kreierten Passwortes mitgeteilt werden (Schritt 6). Der Nutzer kann individuell an Hand der angezeigten Güteklasseklasse bzw. an Hand der individuellen Gültigkeitsdauer entscheiden, ob er das Passwort wirklich nutzen will oder nicht (Schritt 7). Falls er das Passwort nicht benutzen will, wird der Benutzer zur Eingabe eines neuen Passworts aufgefordert (Schritt 2).

Falls er das Passwort nutzen will, weist das System dem Nutzer das soeben kreierte Passwort mit entsprechender Gültigkeitsdauer zu (Schritt 8). Der Nutzer kann das Passwort solange verwenden, bis die Gültigkeitsdauer abgelaufen ist (Schritt 9). Das Verfahren ist danach beendet (Schritt 10).

Optional ist vorgesehen, dass der Benutzer rechtzeitig, in der Regel kurz vor dem Ablauf der Gültigkeitsdauer des Passwortes vom System automatisch aufgefordert werden kann, sein Passwort zu wechseln und ein neues Passwort zu kreieren. Ebenso kann der Nutzer zu jedem beliebigem Zeitpunkt auf eigenen Wunsch sein Passwort wechseln. Das Verfahren wird jeweils ab Schritt 2 erneut ausgeführt.

Chipkarten (oder andere Hardware-Tokens) haben üblicherweise keinen internen Timer. Zudem ist die PIN üblicherweise rein numerisch. Aber selbst dann ließe sich obiges Verfahren sinngemäß nutzen, um zu erreichen, dass der Kunde seine PIN wechselt und einen Anreiz erhält, eine sichere(re) PIN zu wählen:
- Auch wenn Chipkarten keine internen Timer haben sollten, ist es aber doch möglich, interne Prozeduren, die gewissen Events zugeordnet sind, zu zählen. So beschreibt die DE 198 18 830 A1 die Erfassung der Anzahl der in der Chipkarte ausgeführten Authentifizierungsprozeduren. Denkbar wäre es auch, die Anzahl von Schreibzugängen auf gewissen Datenfeldern in der Chipkarte zu erfassen z. B. auf das Datenfeld "Last Number Dialled", um auf diese Weise die Anzahl der abgehenden Gespräche zu kontrollieren. Weitere Möglichkeiten bestünden darin, die Anzahl der PIN-Abfragen bzw. die Anzahl entweder der richtigen oder der falschen oder aller PIN-Eingaben zu erfassen.
- Wenn nun ein solcher hierfür ausgewählter Zähler in der Chipkarte einen gewissen Grenzwert erreicht oder überschritten hat, könnte der Nutzer zur Änderung der PIN aufgefordert werden. Hierzu wertet die Applikation (etwa im mobilen Endgerät) den ausgewählten Zähler in der Chipkarte bzw. den zugehörigen Status der Chipkarte aus und zeigt dem Nutzer dann, wenn der Zähler einen Grenzwert erreicht oder überschritten hat, die entsprechende Eingabemaske zur Änderung der PIN an (üblicherweise zunächst Eingabe der bisherigen PIN, dann Eingabe einer neuen PIN sowie Bestätigung durch erneute Eingabe dieser neuen PIN). Die Chipkarte speichert dann diese neue PIN und setzt den ausgewählten Zähler und zugehörigen Status zurück.
- Chipkarten sind darüber hinaus auch von außen ansprechbar (z. B. über OTA-Prozeduren). Es wäre somit auch denkbar, den o.a. ausgewählten Zähler von außen zu beeinflussen und soweit hochzuzählen, dass ein gewisser Grenzwert erreicht wird und der Nutzer wiederum, wie soeben beschreiben, zur Änderung der PIN aufgefordert wird
- Auch wenn die PIN rein numerisch ist, sind üblicherweise unterschiedliche Längen (etwa 4 bis 8-stellig) zugelassen.
- Die Bewertungsfunktion für numerische PIN berücksichtigt daher insbesondere die Länge der PIN, da offensichtlich die PIN grundsätzlich desto sicherer wird je länger sie vom Nutzer gewählt wird.
- Wählt der Nutzer nun eine sicherere, sprich längere PIN, so könnte der Grenzwert hochgesetzt werden. Der Nutzer würde daher in der Regel (ähnliches Nutzungsverhalten der Karte wie bislang vorausgesetzt) erst später erneut zu einem PIN-Wechsel aufgefordert werden. Somit hätte der Nutzer auch hier, also bei der Nutzung einer Chipkarte, deren Zugang durch rein numerische PINs geschützt ist, den grundsätzlichen Vorteil, die sicherere PIN länger als eine weniger sicherere PIN nutzen können. Dies würde erst recht für Chipkarten oder sonstige Hardware-Tokens gelten, deren Zugang nicht nur mit rein numerischen, sondern beispielsweise mit alphanumerischen PIN geschützt sind.

## Patentansprüche

1. Passwortmanagementsystem zur Überprüfung eines Passwortes und Zuweisung dieses Passwortes zu einem Benutzer, welches Passwort der Authentifizierung des Benutzers gegenüber einem technischen System dient, wobei das Passwortmanagementsystem für jedes Passwort eine individuelle Gültigkeitsdauer in Abhängigkeit von bestimmten Kriterien implementiert und das Passwort mit der individuell festgelegten Gültigkeitsdauer dem Benutzer zuweist, **gekennzeichnet durch** eine Bewertungsfunktion, die für ein vom Benutzer eingegebenes Passwort ein Sicherheitsniveau anhand vorgegebener Kriterien bestimmt und dem Passwort eine dem Sicherheitsniveau zugeordnete Güteklasse zuweist, und die individuelle Gültigkeitsdauer des Passwortes in Abhängigkeit des dem Passwort zugewiesenen Sicherheitsniveaus bzw. der dem Passwort zugewiesenen Güteklasse festlegt,
wobei das Passwortmanagementsystem ein Teil einer Chipkarte oder eines Hardware-Tokens ist und es die Gültigkeitsdauer der PIN der Chipkarte oder des Hardware-Tokens intern begrenzt, in dem ein Zähler innerhalb der Chipkarte oder des Hardware-Tokens, wie zum Beispiel ein Zähler für die Anzahl der bisherigen Eingaben einer korrekten PIN, einen anzahlmäßigen Grenzwert erreicht oder überschreitet.

2. System nach Anspruch 1, dass das Passwort eine Personal Identification Number, PIN, ist.

3. System nach Anspruch 1 oder 2, **dadurch gekennzeichnet, dass** die dem Passwort zugewiesene Gültigkeitsdauer umso länger ist, je höher die Güteklasse des Passwortes ist.

4. System nach einem der vorhergehenden Ansprüche, **dadurch gekennzeichnet, dass** die Kriterien zur Bestimmung der Güteklasse eines Passworts einen oder mehrere der folgenden Parameter umfassen: Anzahl der verwendeten Zeichen, Art der verwendeten Zeichen, semantische Bedeutung des Passwortes insgesamt oder von Teilen des Passwortes.

5. System nach einem der vorhergehenden Ansprüche, **dadurch gekennzeichnet, dass** es Passwörter, die eine minimale, vorgegebene Güteklasse unterschreiten, automatisch zurückweist.

6. System nach einem der vorhergehenden Ansprüche, **dadurch gekennzeichnet, dass** es dem Benutzer vor der Zuweisung des Passwortes dessen ermittelte Güteklasse und/oder Gültigkeitsdauer anzeigt, und der Benutzer individuell an Hand der Güteklasse und/oder Gültigkeitsdauer entscheiden kann, ob er das Passwort nutzen will oder nicht.

7. System nach einem der vorhergehenden Ansprüche, **dadurch gekennzeichnet, dass** es automatisch die Passwort-Vergangenheit des Benutzers überprüft, indem es das aktuelle Passwort mit den letzten x Passwörtern des Benutzers und/oder den Passwörtern des Benutzers aus dem vergangenen Zeitraum y oder einer Kombination hiervon vergleicht.

8. System nach einem der vorhergehenden Ansprüche, **dadurch gekennzeichnet, dass** es den Benutzer rechtzeitig, vorzugsweise kurz vor dem Ablauf der Gültigkeitsdauer des Passwortes automatisch auffordert, ein neues Passwort seiner Wahl zu definieren.

9. System nach einem der vorhergehenden Ansprüche, **dadurch gekennzeichnet, dass** der Benutzer vom Passwortmanagementsystem vor oder während der Eingabe allgemeine Hinweise zur Generierung eines sicheren Passworts erhält.

10. System nach einem der vorhergehenden Ansprüche, **dadurch gekennzeichnet, dass** es dem Benutzer kommuniziert, dass Passwörter mit hoher Güteklasse eine längere Gültigkeitsdauer aufweisen als Passwörter mit einer niedrigen Güteklasse.

11. System nach einem der vorhergehenden Ansprüche, **dadurch gekennzeichnet, dass** es Teil eines Datenverarbeitungssystems der Chipkarte oder einer Anwendung ist und auf Hardware und/oder Software basiert.

12. System nach einem der vorhergehenden Ansprüche, **dadurch gekennzeichnet, dass** es die Gültigkeitsdauer der PIN der Chipkarte oder des Hardware-Tokens extern begrenzt, in dem ein interner Zähler, im Sinne von Anspruch 1, über entsprechende Prozeduren von außen, etwa über OTA-Befehle zum Hochzählen des internen Zählers, so beeinflusst wird, dass dieser Zähler einen anzahlmäßigen Grenzwert erreicht oder überschreitet.

13. System nach einem der vorhergehenden Ansprüche, **dadurch gekennzeichnet, dass** es die Chipkarte in einem Status versetzt, bei dem alle PIN-geschützten Aktionen in der Chipkarte erst dann aktiviert werden können, wenn die PIN gewechselt wurde (in der Regel nach vorheriger Eingabe der bislang gültigen PIN),

14. System nach einem der vorhergehenden Ansprüche, **dadurch gekennzeichnet, dass** bei der Chipkarte oder dem Hardware-Token durch die zugehörige Applikation, die den Zähler, im Sinne von Anspruch 12, oder den Status, im Sinne von Anspruch 13, auswertet, der Nutzer aufgefordert wird, die PIN zu wechseln.

15. System nach einem der vorhergehenden Ansprüche, **dadurch gekennzeichnet, dass** es die Gültigkeitsdauer der PIN der Chipkarte oder des Hardwere-Tokens mittels individueller Festlegung des anzahlmäßigen Grenzwertes in Abhängigkeit der Güte der gewählten rein numerischen oder sonstigen PI N festlegt.

16. Verfahren für ein Passwortmanagement zur Überprüfung eines Passwortes und Zuweisung dieses Passwortes zu einem Benutzer, welches Passwort der Authentifizierung des Benutzers gegenüber einem technischen System dient, wobei für jedes Passwort eine individuelle Gültigkeitsdauer in Abhängigkeit von bestimmten Kriterien implementiert und das Passwort mit der individuell festgelegten Gültigkeitsdauer dem Benutzer zugewiesen wird, **dadurch gekennzeichnet.**
**dass** mittels einer Bewertungsfunktion für ein vom Benutzer eingegebenes Passwort ein Sicherheitsniveau anhand vorgegebener Kriterien bestimmt und dem Passwort eine dem Sicherheitsniveau zugeordnete Güteklasse zugewiesen wird und die individuelle Gültigkeitsdauer des Passwortes in Abhängigkeit des dem Passwort zugewiesenen Sicherheitsniveaus bzw. der dem Passwort zugewiesenen Güteklasse festlegt wird, wobei das Verfahren bei einer Chipkarte oder einem Hardware-Token zu Anwendung kommt und die Gültigkeitsdauer der PIN der Chipkarte oder des Hardware-Tokens intern begrenzt wird, in dem ein Zähler innerhalb der Chipkarte oder des Hardware-Tokens, wie zum Beispiel ein Zähler für die Anzahl der bisherigen Eingaben einer korrekten PIN, einen anzahlmäßigen Grenzwert erreicht oder überschreitet.

## Claims

1. Password management system for checking a password and assigning this password to a user, which password serves to authenticate the user to a technical system, the password management system implementing an individual period of validity for each password as a function of certain criteria and assigning the password with the individually fixed period of validity to the user, **characterised by** an assessment function which, for a password entered by the user, determines a security level with the aid of given criteria and assigns the password a quality category allocated to the security level, and fixes the individual period of validity of the password as a function of the security level assigned to the password or the quality category assigned to the password, the password management system forming part of a chip card or hardware token and internally defining the period of validity of the PIN of the chip card or hardware token by a counter inside the chip card or hardware token, for example a counter for the number of previous entries of a correct PIN, reaching or exceeding a numerical limit value.

2. System according to claim 1, that the password is a personal identification number PIN.

3. System according to claim 1 or 2, **characterised in that**, the higher the quality category of the password, the longer the period of validity assigned to the password.

4. System according to one of the preceding claims, **characterised in that** the criteria for determining the quality category of a password include one or more of the following parameters: number of characters used, type of characters used, semantic meaning of the password as a whole or of parts of the password.

5. System according to one of the preceding claims, **characterised in that** it automatically rejects passwords which fall below a minimum given quality category.

6. System according to one of the preceding claims, **characterised in that**, before assigning the password, it indicates to the user its quality category and/or period of validity ascertained, and the user can decide individually with the aid of the quality category and/or period of validity whether he wants to use the password or not.

7. System according to one of the preceding claims, **characterised in that** it automatically checks the password history of the user by comparing the current password with the user's last x passwords and/or the user's passwords from the past period y or a combination thereof.

8. System according to one of the preceding claims, **characterised in that** it automatically asks the user in time, preferably just before expiry of the period of validity of the password, to define a new password of his choice.

9. System according to one of the preceding claims, **characterised in that** the user receives from the password management system, before or during entry, general instructions for generating a secure password.

10. System according to one of the preceding claims, **characterised in that** it communicates to the user that passwords having a high quality category have a longer period of validity than passwords with a low quality category.

11. System according to one of the preceding claims, **characterised in that** it forms part of a data processing system of the chip card or an application and is based on hardware and/or software.

12. System according to one of the preceding claims, **characterised in that** it externally defines the period of validity of the PIN of the chip card or hardware token by influencing an internal counter, within the meaning of claim 1, through corresponding procedures from outside, for example through OTA commands for increasing the count of the internal counter, in such a way that this counter reaches or exceeds a numerical limit value.

13. System according to one of the preceding claims, **characterised in that** it gives the chip card a status in which all PIN-protected actions in the chip card can be activated only when the PIN has been changed (as a rule, after prior entry of the PIN which was valid up till then).

14. System according to one of the preceding claims, **characterised in that**, in the case of the chip card or hardware token, the user is asked to change the PIN by the associated application which assesses the counter, within the meaning of claim 12, or the status, within the meaning of claim 13.

15. System according to one of the preceding claims, **characterised in that** it fixes the period of validity of the PIN of the chip card or hardware token by individually fixing the numerical limit value as a function of the quality of the chosen purely numerical or other PIN.

16. Method for a password management system for checking a password and assigning this password to a user, which password serves to authenticate the user to a technical system, an individual period of validity being implemented for each password as a function of certain criteria and the password being assigned with the individually fixed period of validity to the user, **characterised in that**, by means of an assessment function, for a password entered by the user, a security level is determined with the aid of given criteria and the password is assigned a quality category allocated to the security level, and the individual period of validity of the password is fixed as a function of the security level assigned to the password or the quality category assigned to the password, the method being used with a chip card or hardware token and the period of validity of the PIN of the chip card or hardware token being defined internally by a counter inside the chip card or hardware token, for example a counter for the number of previous entries of a correct PIN, reaching or exceeding a numerical limit value.

## Revendications

1. Système de gestion de mots de passe pour vérifier un mot de passe et attribuer celui-ci à un utilisateur, lequel mot de passe sert à authentifier l'utilisateur par rapport à un système technique, étant précisé que le système de gestion de mots de passe met en place pour chaque mot de passe une durée de validité individuelle en fonction de critères définis, et attribue le mot de passe, avec la durée de validité fixée individuellement, à l'utilisateur,
**caractérisé par** une fonction d'évaluation qui définit à l'aide de critères prédéfinis un niveau de sécurité pour un mot de passe entré par l'utilisateur, qui attribue au mot de passe une catégorie de qualité associée au niveau de sécurité et qui fixe la durée de validité individuelle du mot de passe en fonction du niveau de sécurité ou de la catégorie de qualité attribués au mot de passe,
le système de gestion de mots de passe faisant partie d'une carte à puce ou d'un jeton matériel et limitant au niveau interne la durée de validité du numéro d'identification personnel PIN de la carte à puce ou du jeton matériel grâce au fait qu'un compteur prévu à l'intérieur de la carte ou du jeton, comme par exemple un compteur pour le nombre d'entrées d'un PIN correct réalisées jusque là, atteint ou dépasse une valeur de nombre limite.

2. Système selon la revendication 1, **caractérisé en ce que** le mot de passe est un numéro d'identification personnel, PIN.

3. Système selon la revendication 1 ou 2, **caractérisé en ce que** plus la catégorie de qualité du mot est élevée, plus la durée de validité attribuée au mot de passe est longue.

4. Système selon l'une des revendications précédentes, **caractérisé en ce que** les critères pour définir la catégorie de qualité d'un mot de passe comprennent l'un au moins des paramètres suivants : nombre de signes utilisés, type de caractères utilisés, valeur sémantique du mot de passe dans son ensemble ou de parties du mot de passe.

5. Système selon l'une des revendications précédentes, **caractérisé en ce qu'**il refuse automatiquement les mots de passe qui sont inférieurs à une catégorie de qualité minimale prédéfinie.

6. Système selon l'une des revendications précédentes, **caractérisé en ce qu'**il indique à l'utilisateur, avant d'attribuer le mot de passe, la catégorie de qualité et/ou la durée de validité déterminées pour celui-ci, et l'utilisateur peut décider individuellement, grâce à la catégorie de qualité et/ou à la durée de validité, s'il veut utiliser le mot de passe ou pas.

7. Système selon l'une des revendications précédentes, **caractérisé en ce qu'**il contrôle automatiquement le passé des mots de passe de l'utilisateur en comparant le mot de passe actuel aux x derniers mots de passe de l'utilisateur et/ou aux mots de passe de l'utilisateur de la période passée y ou à une combinaison de ceux-ci.

8. Système selon l'une des revendications précédentes, **caractérisé en ce qu'**il invite automatiquement l'utilisateur à temps, de préférence peu de temps avant l'expiration de la durée de validité du mot de passe, à définir un nouveau mot de passe de son choix.

9. Système selon l'une des revendications précédentes, **caractérisé en ce que** l'utilisateur, avant ou pendant l'entrée, reçoit du système de gestion des mots de passe des instructions générales pour la création d'un mot de passe sûr.

10. Système selon l'une des revendications précédentes, **caractérisé en ce qu'**il fait savoir à l'utilisateur que les mots de passe d'une catégorie de qualité élevée ont une durée de validité plus longue que les mots de passe d'une catégorie de qualité basse.

11. Système selon l'une des revendications précédentes, **caractérisé en ce qu'**il fait partie d'un système informatique de la carte à puce ou d'une application et est basé sur un matériel et/ou sur un logiciel.

12. Système selon l'une des revendications précédentes, **caractérisé en ce qu'**il limite au niveau externe la durée de validité du PIN de la carte à puce ou du jeton matériel, grâce au fait qu'un compteur interne, dans le sens de la revendication 1, est influencé de l'extérieur par l'intermédiaire de procédures appropriées, par exemple grâce à des ordres OTA pour augmenter ledit compteur interne, de telle sorte que ce compteur atteigne ou dépasse une valeur de nombre limite.

13. Système selon l'une des revendications précédentes, **caractérisé en ce qu'**il met la carte à puce dans un état dans lequel toutes les actions protégées par le PIN dans ladite carte à puce ne peuvent être activées qu'une fois que le PIN a été changé (en règle générale après entrée préalable du PIN valable jusque là).

14. Système selon l'une des revendications précédentes, **caractérisé en ce que** dans le cas de la carte à puce ou du jeton matériel, grâce à l'application associée qui évalue le compteur dans le sens de la revendication 12 ou l'état dans le sens de la revendication 13, l'utilisateur est invité à changer de PIN.

15. Système selon l'une des revendications précédentes, **caractérisé en ce qu'**il fixe la durée de validité du PIN de la carte à puce ou du jeton matériel à l'aide d'une fixation individuelle de la valeur limite de nombre en fonction de la qualité du PIN purement numérique ou autre qui a été choisi.

16. Procédé pour un système de gestion de mots de passe pour vérifier un mot de passe et attribuer celui-ci à un utilisateur, lequel mot de passe sert à authentifier l'utilisateur par rapport à un système technique, selon lequel pour chaque mot de passe une durée de validité individuelle est mise en place en fonction de critères définis, et le mot de passe, avec la durée de validité fixée individuellement, est attribué à l'utilisateur,
**caractérisé en ce qu'**à l'aide d'une fonction d'évaluation pour un mot de passe entré par l'utilisateur, un niveau de sécurité est défini à l'aide de critères prédéfinis, une catégorie de qualité associée au niveau de sécurité est attribuée au mot de passe et la durée de validité individuelle du mot de passe est fixée en fonction du niveau de sécurité ou de la catégorie de qualité attribués au mot de passe, le procédé étant appliqué avec une carte à puce ou un jeton matériel, et la durée de validité du PIN de la carte à puce ou du jeton matériel étant limitée au niveau interne grâce au fait qu'un compteur prévu à l'intérieur de la carte ou du jeton, comme par exemple un compteur pour le nombre d'entrées d'un PIN correct réalisées jusque là, atteint ou dépasse une valeur de nombre limite.
